# EUROPEAN PATENT APPLICATION

(11) **EP 3 926 093 A1**
(43) Date of publication of application: **22.12.2021**
(21) Application number: 21179724.6
(22) Date of filing: 16.06.2021
(51) Int. Cl.: D21G 5/00, D21F 7/00, D21G 9/00, B08B 9/00, B08B 9/027

(54) **ARRANGEMENT FOR FACILITATING AN OPERATION WITH AN OPERATION DEVICE IN CONNECTION WITH AN OBLONG OBJECT**

(30) Priority: 16.06.2020 FI 20205633
(71) Applicant: L&T Teollisuuspalvelut Oy, 00380 Helsinki (FI)
(72) Inventor: Väisänen, Juha, 40320 Jyväskylä (FI)
(74) Representative: Heinonen & Co

(57) **Abstract**

The present invention pertains to an arrangement for facilitating an operation, such as washing or water cutting with an operation device, such as a high-pressure washer, in connection with an oblong object, such as a tube. Specially, maintaining huge washers in the paper industry is time consuming and difficult work to do, which causes costs, because of the maintenance rundown. The arrangement of the present invention comprises at least one adapter arranged to fasten the arrangement to fixing means of the oblong object in question, and an elongated part comprising a support part for an operation device, the elongated part being arrangeable substantially parallel with the longitudinal axis of the oblong object in question by means of the adapter.

## Description

### FIELD OF THE INVENTION

Generally, the present invention relates to an arrangement for facilitating an operation relating to an oblong object. In particular, the present invention pertains to an arrangement for facilitating an operation with an operation device in connection with an oblong object.

### BACKGROUND

There are many cases when an operation device needs to be taken inside to an oblong object for an operation, such as high pressure water cleaning it or performing water cutting to name few examples.

Especially, paper machines in the paper industry typically comprise drums for washing pulp, for example, having length about 4 - 7 meters and diameter e.g. 2 - 4 meters, for example. These drums needs to be maintained and cleaned frequently, which has been very time consuming and difficult to perform. In addition, the rundown of the machines for several days can cost a lot.

The known solutions for cleaning above-mentioned drums, for example, used in nowadays are difficult to assemble and in many cases, an assembler needs to get into the drum for building and assembling a kind of support for a kind of carriage before the cleaning can start. The operation of assembling and taking down the support can be very time consuming taking several days all together.

In many cases, the oblong objects, such as drums, can be pressurized, which also requires some operations, such as airing, and suitable permissions for working inside the drum. Working in that kind of environment can be dangerous, so also the work safety needs to be improved.

### SUMMARY OF THE INVENTION

The objective is to at least alleviate the problems described hereinabove not satisfactorily solved by the known arrangements, and to provide a fast and safe arrangement for arranging an operation device substantially parallel with the longitudinal axis of an oblong object.

The aforesaid objective is achieved according to the present invention as claimed in claim 1.

Accordingly, in one aspect of the present invention an arrangement for facilitating an operation with an operation device in connection with an oblong object, which comprises fixing means, such as bolts, arranged at least at one end of the oblong object in question, the arrangement comprises at least one adapter arranged to be in connection with the fixing means of the oblong object in question in order to fasten the arrangement to the fixing means of the oblong object in question for an operation with an operation device, and an elongated part comprising a support part for an operation device, the elongated part being arrangeable substantially parallel with the longitudinal axis of the oblong object in question by means of the adapter.

In one embodiment, the elongated part is arrangeable inside of the oblong object by selecting the position of the adapter. The embodiment in question may enable operations, such as cleaning and/or water cut by using a high-pressure device, inside of the oblong object.

In one embodiment, the elongated part comprises a number of attachable pieces for composing a desired length of the elongated part. In another embodiment, the elongated part comprises a number of telescopic parts for composing a desired length of the elongated part. These embodiments may enable to select the length of the elongated part according to the oblong object in question in order to arrange an elongated part long enough to reach out at the both ends of the oblong object, but not being too long to hinder any action in the area outside of the oblong object.

In one embodiment, the elongated part further comprises moving means for adjusting a position of the support part in relation to the elongated part. The moving means of the present invention may enable performing a desired operation with a desired operation device in a desired location of the oblong object in question.

In one embodiment, the adapter comprises a number of parts for adjusting the arrangement to fit in various shapes of fixing means of oblong objects. The embodiment in question may enable the arrangement to be arranged in various kinds of oblong objects having different diameters, for example. In addition, the present embodiment may enable the arrangement to be arranged in fixing means arranged in various kinds of forms, such as, but not limited to, a full or a part circle and/or a rectangle, for example.

In one embodiment, the arrangement further comprises control means for operating the moving means. This embodiment may enable automatization of the intended operation. Automatization may improve work safety and it may accelerate the operation, which may save time and, thus, decrease expenses.

In one embodiment, the arrangement further comprises hanging means for arranging additional devices, such as a hose/hoses and/or wire/wires in a desired positon relating to the oblong object in question. Preferably, the embodiment may help to arrange additional devices in a safe and efficient way not to hinder the operation in question.

Some preferable embodiments of the invention are described in the dependent claims.

The utility of the present invention follows from a plurality of factors depending on each particular embodiment. Significant advantages can be achieved with the present invention when compared to prior art solutions. The arrangement according to the present invention is inexpensive, durable and it may be assembled in a fast and reliable way in connection with a desired oblong object. The fast assembly may provide remarkable timesaving comparing to the solution of the prior art. Reliable assembly in connection with the oblong object in question may provide a significant improvement to the work safety.

The arrangement of the present invention may be able to be assembled outside of the oblong device inside to the oblong device in question without a need of a person to get inside. This may significantly improve the work safety.

Furthermore, the arrangement of the present invention is small of size and it may be assembled in a space-saving way. The storage and the transportation may also be easy, because of the small size of the arrangement.

It may be possible to utilize the present invention widely. The arrangement of the present invention may be able to utilize with various kinds of operation devices in various kinds of oblong objects and/or different kinds of fixing means. The arrangement may be able to arrange outside of the oblong object or inside of the oblong object substantially parallel with the longitudinal axis of the oblong object in question, which may enable variety of operations with an operation device. Fixing means, such as a half or a full circle of bolts arranged around at least at one end of the oblong object.

The expression "oblong object" refers herein to a variety of objects being substantially straight in longitudinal axis of the object, such as, but not limited to, tubes, pipes and/or tubular devices such as pulp washers used by the paper industry, for example. The length of the oblong object may vary widely being in case of the washer typically 4 - 7 meters, for example. Depending on the oblong object in question, the oblong object may have an opening through the longitudinal axis of the object. The diameter of the opening may vary widely being in case of the washer typically 2 - 4 meters, for example. The material of the oblong object may also vary broadly.

The expression "fixing means" refers herein widely to various kinds of fixing means, such as bolts, which are arranged in connection with the oblong object in question, such as, but not limited to, fixing means for a manhole, inspection manhole, a cover, which can be pressure-proof, for example, and/or another kind of closing means of the opening of the oblong object in question. The person skilled in the art understands that the fixing means of the oblong object can be separate from the oblong object.

The expression "operation device" refers herein various kinds of devices needed to be used to a desired operation. The operation can be, but is not limited to, washing, cleaning, purifying, inspecting, water cutting or another desired operation, which requires the operation devices to be taken inside or outside of the oblong device, for example. Typically, cleaning of pulp washers used by the paper industry is performed by using high pressure water jets having pressure typically about 1000-3000 bars, for example. Water cutting is performed by adding sand to the water, for example.

The expression "a number of' refers herein to any positive integer starting from one (1), e.g. to one, two, or three.

As used herein, "plurality" means two or more. As used herein, a "set" of items may include one or more of such items. As used herein, whether in the written description or the claims, the terms "comprising", "including", "carrying", "having", "containing", "involving", and the like are to be understood to be open-ended, i.e., to mean including but not limited to. Only the transitional phrases "consisting of' and "consisting essentially of', respectively, are closed or semi-closed transitional phrases with respect to claims. Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements. As used herein, "and/or" means that the listed items are alternatives, but the alternatives also include any combination of the listed items

### BRIEF DESCRIPTION OF THE RELATED DRAWINGS

Next, the invention is described in more detail with reference to the appended drawings in which
Fig. 1 illustrates an embodiment of an arrangement for facilitating an operation with an operation device in connection with an oblong object in accordance with the present invention,
Fig. 2 illustrates an adapter according to an embodiment of the present invention,
Fig. 3a illustrates a side view of an elongated part according to an embodiment of the present invention,
Fig. 3b illustrates a top view of the elongated part in Fig. 2a, and
Fig. 3c illustrates a top view of an end of the elongated part in Fig. 2a,
Fig. 4 illustrates a side view of hanging means according to an embodiment of the present invention.

### DETAILED DESCRIPTION OF THE EMBODIMENTS

Throughout this description, the embodiments and examples shown should be considered as exemplars, rather than limitations on the arrangement disclosed or claimed. Although many of the examples presented herein involve specific combinations of arrangement elements, it should be understood that those elements may be combined in other ways to accomplish the same objectives.

In the Figures herein, unique features receive unique reference numerals, while features that are the same in more than one drawing receive the same reference numerals throughout. Further, certain terms of orientation may be used, such as "upper," "lower," "top," "bottom," "left," "right," "inside," "outside," "interior," "exterior," "inner," and "outer." These terms are generally for convenience of reference, and should be so understood unless a particular embodiment requires otherwise.

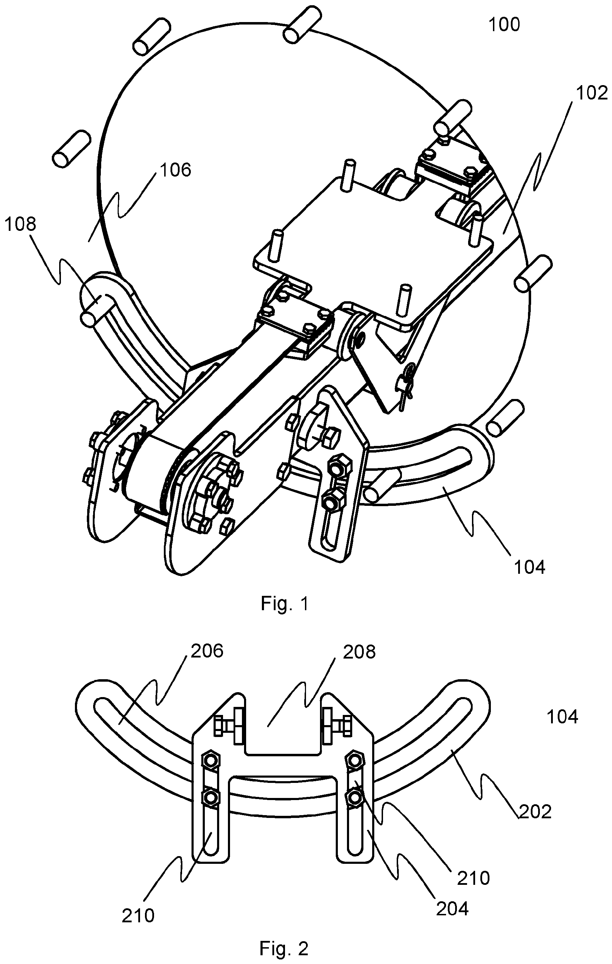

Figure 1 illustrates an embodiment of an arrangement for facilitating an operation with an operation device in connection with an oblong object. The arrangement 100 comprises an elongated part 102 and at least one adapter 104. The arrangement can be arranged in an oblong object 106 comprising fixing means 108, such as bolts, for example.

As can be seen in Fig. 1, the elongated part 102 can be arranged substantially parallel with the central axis of the oblong object 106 in question. In one embodiment, the elongated part 102 is arranged inside of the oblong object 106 by means of the adapter 104. In another embodiment, the elongated part 102 is arranged outside of the oblong object 106 by means of the adapter 104.

Fig. 2 illustrates an adapter according to an embodiment of the present invention. The adapter 104 can be arranged to the fixing means of the oblong object 106 in question in order to fasten the arrangement 100 to the oblong object 106 for an operation with an operation device.

The adapter is preferably made of a rigid and durable material, such as, but not limited to, steel and/or stainless steel, for example.

In an embodiment, the adapter 104 comprises a back part 202 to be fastened to the fixing means of an oblong object and a front part 204 for fastening the elongated part to the adapter and/or supporting the elongated part in the desired position inside or outside of the oblong object in question.

In an embodiment, the back part 202 has an arched shape. The person skilled in the art understands that the radius of the arch shape is selected according to the radius of common oblong object.

In an embodiment, the back part comprises a slot 206 for arranging the fixing means into the slot 206 so that the back part 202 hangs from the fixing means. The person skilled in the art understands that the slot 206 can be formed as united, but also arranging separated slots in the back part 202.

In an embodiment, the back part 202 can be arranged to the fixing means as a downward opening arc or an upward opening arc depending on the desired position of the elongated part in relation to the oblong object in question.

In an embodiment, the adapter is adjustable for fastening the arrangement to various kinds of fixing means of the oblong objects. The adjustability of the adapter can be arranged in different ways. In an embodiment, the back part 202 comprises more than one piece, such as, but not limited, to two pieces.

In an embodiment, the pieces of the back part are movably connected together by connection means, such as a hinge and/or a joint. In another embodiment, the movably connected pieces of the back part comprises means for tightening the pieces in a desired position. In another embodiment, the pieces of the back part 202 are spaced apart.

In an embodiment, the front part 204 comprises an opening 208 for supporting the elongated part and/or for fastening the elongated part to the adapter 104. The person skilled in the art understands that various kinds of fastening means, such as bolts and nuts and/or screws can to suitable places for fastening the elongated part to the adapter.

The front part 204 and the back part 202 are advantageously connected together detachably or at least adjustably. In an embodiment, the front part comprises at least one opening or a slot for fastening the front part 204 and the back part 202 together by using some common fastening means, such as bolts and nuts and/or screws.

In an embodiment, the position of the front part 204 in relation the back part 202, such as vertical distance, is adjustable. Fig. 2 depicts an embodiment of a front part 204 comprising two vertical slots 210 for adjusting the vertical position of the front part 204 in relation to the back part 202. The slots 210 is also used for adjusting the level of the elongated part and thus the level of the support part to be in desired angle with the horizontal axis of the oblong object The person skilled in the art understands that the back part 202 naturally comprises corresponding means for fastening the front part 204 and the back part 202 together, such as suitable openings, holes and/or slots for the fastening means.

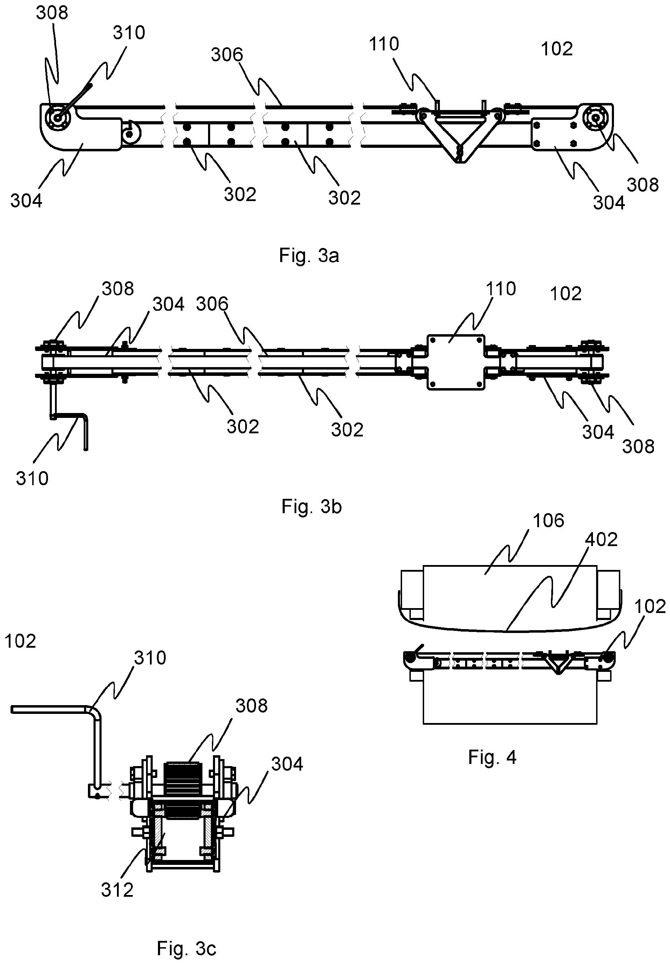

Figs. 3a-3c illustrate a side view, a top view and a top view of an end of the elongated part 102, respectively, according to an embodiment of the present invention. The person skilled in the art understands that the length of the elongated part 102 can be selected according to the intended use, being e.g. 4 - 7 meters, for example

In an embodiment, the elongated part 102 comprises a number of attachable pieces 302 for composing a desired length of the elongated part 102. In the embodiment in question, the attachable pieces 302 comprise means for attaching and detaching the pieces 302, such as bolts and nuts arranged through holes in the pieces 302, for example.

In another embodiment, the elongated part 102 comprises a number of telescopic parts for composing a desired length of the elongated part 102. In the embodiment in question, the telescopic parts comprise locking means, such as locking pins arrangeable trough corresponding holes, for example, for locking a number of telescopic parts in a fixed position in order to form the elongated part with a desired length.

Furthermore, the elongated part 102 comprises end parts 304 arranged at the both ends of the elongated part 102. In embodiment wherein the elongated part comprises attachable pieces, the end parts 304 are attached at the both end of the attachable pieces. In an embodiment wherein the elongated part 102 comprises a number of telescopic parts, at least a part of telescopic parts can be arranged in an retractable connection with at one of the end parts.

The elongated part 102 further comprises a support part 110 for an operation device (not shown). The support part 110 is arranged in the elongated part 110 in a way that the support part 110 can be moved along the elongated part 102. The person skilled in the art understands that the support part 110 comprises suitable means, such as rolls and/or wheels, for facilitating the movement of the support part 110.

Advantageously, the support part is made of a rigid and durable material, such as, but not limited to, steel and/or stainless steel, for example. Furthermore, the support part preferably comprises means, such as bolts and nuts, for example, for fixing an operation device to the support part

In an embodiment, the elongated part 102 further comprises moving means 306 for adjusting a position of the support part 110 in the elongated part 102. The moving means 306 can be arranges in various ways, such as using one or more suitable straps, chains, rails, slotted rails, I-beams and/or a combination thereof. The person skilled in the art understands that the support part 110 is arranged in connection with the moving means in order to adjust the position of the support part 110.

In an embodiment, the moving means are arranged in a form of a loop and the end parts 304 comprise appropriate means 308, such as, but not limited to, gears, pinions, wheels and/or cogs, for arranging the loop to extend between the end parts 304. In an embodiment, the support part 110 is connected in the loop, as can be seen in Figs. 3a-3b.

In an embodiment, the elongated part 102 comprises an opening 312 through the longitudinal axis of the elongated part 102. The embodiment in question enables the arrangement wherein the downside of the loop travels inside the opening 312. Advantageously in this embodiment, the support part 110 can be arranged to move on the top outside surface of the elongated part by means of the rolls and/or wheels, for example.

In an embodiment, the arrangement further comprises control means 310 for operating the moving means in order to adjust the position of the support part in relation to the elongated part. In an embodiment, the control means 310 are arranged at the one end part 304 of the elongated part 102. The control mean scan be arranged in various ways, such as, but not limited to, a hand crank, a frequency converter and/or an electric motor, such as a servo motor, for example.

In an embodiment, the arrangement further comprises supplementary means, such as, but not limited to, a position sensor arranged to detect the position of the support part 110, a camera arranged in connection with the support part 110 for providing visual information and/or another suitable detectors, sensors and/or devices.

The person skilled in the art understands the controlling means can be partly or fully automated comprising suitable means for executing desired program with the control means.

Fig. 4 illustrates a side view of hanging means according to an embodiment of the present invention. In an embodiment, the arrangement further comprises hanging means 402 for hanging means for alleviating assembly and/or arranging additional devices, such as a hose/hoses and/or wires in a desired positon relating to the oblong object 106 in question. In an embodiment, the hanging means 402 are arranged above the elongated part 102. The hanging means can comprise conventional parts, such as clasps and/or hooks, for fixing the hanging means outside of the oblong object in question.

Consequently, a skilled person may on the basis of this disclosure and general knowledge apply the provided teachings in order to implement the scope of the present invention as defined by the appended claims in each particular use case with necessary modifications, deletions, and additions.

## Claims

1. An arrangement for facilitating an operation with an operation device in connection with an oblong object comprising fixing means, such as bolts, arranged at least at one end of the oblong object in question, **characterized in that**, the arrangement comprises
- at least one adapter arranged to be in connection with the fixing means of the oblong object in question in order to fasten said arrangement to the fixing means of the oblong object in question for an operation with a an operation device, and
- an elongated part comprising a support part for an operation device, which said elongated part is arrangeable substantially parallel with the longitudinal axis of the oblong object in question by means of said adapter.

2. The arrangement of claim 1, wherein said elongated part is arrangeable inside of said oblong object by selecting the position of said adapter.

3. The arrangement of any preceding claim, wherein said elongated part comprises a number of attachable pieces for composing a desired length of the elongated part.

4. The arrangement of any of claims 1-2, wherein said elongated part comprises a number of telescopic parts for composing a desired length of the elongated part.

5. The arrangement of any preceding claim, wherein said elongated part further comprises moving means for adjusting a position of said support part in relation of said elongated part.

6. The arrangement of any preceding claim, wherein said adapter comprises a number of parts for adjusting said arrangement to fit in various shapes of fixing means of oblong objects.

7. The arrangement of any preceding claim, wherein said arrangement further comprises control means for operating said moving means.

8. The arrangement of any preceding claim, wherein said arrangement further comprises hanging means for alleviating assembly of said arrangement and/or arranging additional devices, such as a hose/hoses and/or wire/wires in a desired positon relating to the oblong object in question.
